# EUROPEAN PATENT SPECIFICATION

(11) **EP 4 651 084 B1**
(45) Date of publication and mention of the grant of the patent: **21.10.2026**
(21) Application number: 24728009.2
(22) Date of filing: 26.03.2024
(51) Int. Cl.: G06T 7/62, G06Q 10/083, G06T 7/50

(54) **ITEM VOLUME CALCULATION METHOD AND APPARATUS, AND ELECTRONIC DEVICE AND STORAGE MEDIUM**
VERFAHREN UND VORRICHTUNG ZUR BERECHNUNG EINES ARTIKELVOLUMENS SOWIE ELEKTRONISCHE VORRICHTUNG UND SPEICHERMEDIUM
PROCÉDÉ ET APPAREIL DE CALCUL DE VOLUME D'ARTICLE, DISPOSITIF ÉLECTRONIQUE ET SUPPORT DE STOCKAGE

(43) Date of publication of application: 19.11.2025
(73) Proprietor: Streamax Technology Co., Ltd., Shenzhen, Guangdong 518000 (CN)
(72) Inventor: GAO, Yipeng, Shenzhen, Guangdong 518000 (CN)
(74) Representative: Barbaro, Gaetano
(86) International application number: PCT/CN2024/083872
(87) International publication number: WO 2025/199754

(56) References cited:
- EP-A1- 4 181 064
- CN-A- 111 709 987
- CN-A- 112 991 427
- CN-A- 114 373 005
- CN-A- 114 373 005
- CN-A- 116 205 836
- CN-A- 117 132 633
- CN-A- 117 670 979
- US-B1- 11 748 901

## Description

### TECHNICAL FIELD

The present application relates to the field of logistics technology, and in particular to a method and an apparatus for an object volume calculation, an electronic device and a storage medium.

### BACKGROUND

As an important link in the modern logistics industry, logistics distribution is not only an important guarantee for commodity circulation, but also a key factor in promoting economic development and improving corporate competitiveness. The volume calculation technology of items in the cargo box has wide application and research significance in the logistics industry, warehousing management, transportation planning and other fields. By accurately measuring the volume of the items in the cargo box, it can help logistics enterprises achieve accurate loading, optimize the transportation route and other goals, so as to improve logistics efficiency and reduce transportation costs, and the volume calculation technology of the items in the cargo box can be combined with the intelligent storage system to achieve automated cargo classification, storage and pickup, so as to improve the storage efficiency and accuracy for constructing an intelligent storage system, and promote digital transformation of enterprises.

CN117132633A provides a monocular camera-based loading rate estimation method, which includes steps of: obtaining a first image in a warehouse collected by a monocular camera, carrying out the preprocessing of the first image, and obtaining a first depth estimation map of the first image; mapping the first depth estimation map into a first three-dimensional point cloud; performing three-dimensional reconstruction on the first three-dimensional point cloud to obtain a second three-dimensional point cloud under a world coordinate system; obtaining a first two-dimensional square matrix based on the second three-dimensional point cloud; and estimating the loading rate of the warehouse based on the first two-dimensional square matrix.

CN114373005A provides a cargo volume measurement method which includes steps of: obtaining a first image in a carriage, the first image being an image of no-load of the carriage; processing the first image to obtain a three-dimensional geometric model of the bottom surface of the carriage; acquiring a second image in the carriage, where the second image is an image of a carriage load; performing differential processing on the first image and the second image to obtain a foreground image; based on calibration parameters of the depth camera, converting each pixel in the foreground image into a cargo three-dimensional point cloud, and performing sparse processing on the cargo three-dimensional point cloud; and projecting the sparse cargo three-dimensional point cloud to the three-dimensional geometric model of the bottom surface of the carriage to obtain a projection point cloud, and obtaining the volume of the cargo based on the volumes of the grid columns between the points in the sparse cargo three-dimensional point cloud and the corresponding projection points in the projection point cloud.

### TECHNICAL PROBLEM

In view of this, a problem that needs to be considered at present is how to ensure that the precision and accuracy of object volume measurement are not affected by a material of the object, while effectively controlling the cost of volume measurement.

### TECHNICAL SOLUTIONS

One objective of the embodiments of the present application is to provide a method and an apparatus for an object volume calculation, an electronic device and a storage medium.

In accordance with a first aspect, an embodiment of the present application provides a method for an object volume calculation, which includes the following steps: obtaining an interior image of a cargo box through a camera; inputting the interior image into a trained target depth estimation model to obtain depth information of the interior image; obtaining initial point clouds inside the cargo box according to the depth information and parameter information of the camera; and calculating a volume of a target object inside the cargo box according to target point clouds that meet a preset condition in the initial point clouds, where the target object is an object corresponding to the target point clouds. The step of calculating the volume of the target object inside the cargo box based on the target point clouds that meet the preset condition in the initial point clouds includes steps of: obtaining a depth of the cargo box when the cargo box is in an empty condition and distances from an installation position of the camera to four planes inside the cargo box, wherein the four planes inside the cargo box are respectively a left plane, a right plane, a top plane, and a bottom plane inside the cargo box; projecting the initial point clouds to a two-dimensional plane to obtain a two-dimensional point coordinate set; performing a discrete conversion processing on two-dimensional point coordinates in the two-dimensional point coordinate set according to a preset size to obtain discretized grid cells; constructing a coordinate system with the installation position of the camera as a center, and traversing, starting from the bottom plane of the cargo box, the discretized grid cells in an order from left to right and bottom to top, to determine whether the grid coordinates corresponding to the discretized grid cells are within the distances; filtering out point clouds corresponding to grid cells exceeding the distances from the initial point clouds, and determining remaining point clouds in the initial point clouds as the target point clouds; and calculating the volume of the target object inside the cargo box according to the target point clouds and the depth of the cargo box.

In one embodiment, the parameter information includes a focal length; and the step of obtaining the initial point clouds inside the cargo box based on the depth information and the parameter information of the camera includes steps of: obtaining pixel coordinates of pixels in the interior image; obtaining three-dimensional coordinates of the pixels in the interior image inside the cargo box according to the focal length of the camera, the pixel coordinates of the pixels and the depth information corresponding to the pixels; and determining the initial point clouds inside the cargo box according to the three-dimensional coordinates corresponding to the pixels in the interior image.

In one embodiment, the step of calculating the volume of the target object inside the cargo box based on the target point clouds includes steps of: filling a target grid cell according to the depth information, and calculate a volume of a cuboid corresponding to the target grid cell based on the depth of the cargo box, where the target grid cell is a grid cell corresponding to the target point clouds; and calculating the volume of the target object according to the volume of the cuboid corresponding to the target grid cell and a number of the target grid cell.

In one embodiment, the method also includes steps of: constructing a supervised training data set; performing a supervised training on an initial depth estimation model by utilizing the supervised training data set to obtain a training loss; and updating the initial depth estimation model based on the training loss until the training loss meets a preset loss condition to obtain the trained target depth estimation model.

In accordance with a second aspect, an embodiment of the present application provides an apparatus for an object volume calculation, which includes: an image acquisition unit, a depth acquisition unit, a point cloud acquisition unit and a volume calculation unit.

The image acquisition unit is configured to obtain an interior image of a cargo box through a camera.

The depth acquisition unit is configured to input the interior image into a trained target depth estimation model to obtain depth information of the interior image.

The point cloud acquisition unit is configured to obtain initial point clouds inside the cargo box based on the depth information and parameter information of the camera.

The volume calculation unit is configured to calculate a volume of a target object inside the cargo box based on target point clouds that meet a preset condition in the initial point clouds, where the target object is an object corresponding to the target point clouds.

The volume calculation unit comprises: a camera distance acquisition module, a point cloud filtering module and a volume calculation module.

The camera distance acquisition module is configured to obtain a depth of the cargo box when the cargo box is in an empty condition, and distances from an installation position of the camera to four planes inside the cargo box, wherein the four planes inside the cargo box are respectively a left plane, a right plane, a top plane, and a bottom plane inside the cargo box.

The point cloud filtering module is configured to: project the initial point clouds to a two-dimensional plane to obtain a two-dimensional point coordinate set; perform a discrete conversion processing on two-dimensional point coordinates in the two-dimensional point coordinate set according to a preset size to obtain discretized grid cells; construct a coordinate system with the installation position of the camera as a center, and traverse, starting from the bottom plane of the cargo box, the discretized grid cells in an order from left to right and bottom to top, to determine whether the grid coordinates corresponding to the discretized grid cells are within the distances; and filter out point clouds corresponding to grid cells exceeding the distances from the initial point cloud, and determine remaining point clouds in the initial point clouds as the target point clouds.

The volume calculation module is configured to calculate the volume of the target object inside the cargo box according to the target point clouds and the depth of the cargo box.

In one embodiment, the parameter information includes a focal length, and the point cloud acquisition unit is configured to: obtain pixel coordinates of pixels in the interior image; obtain three-dimensional coordinates of the pixels in the interior image inside the cargo box according to the focal length of the camera, the pixel coordinates of the pixels and the depth information corresponding to the pixels; and determine the initial point clouds inside the cargo box according to the three-dimensional coordinates corresponding to the pixels in the interior image.

In one embodiment, the volume calculation module is configured to: fill a target grid cell according to the depth information, and calculate a volume of a cuboid corresponding to the target grid cell based on the depth of the cargo box, where the target grid cell is a grid cell corresponding to the target point clouds; and calculate the volume of the target object according to the volume of the cuboid corresponding to the target grid cell and a number of the target grid cell.

In one embodiment, the apparatus further includes: an image acquisition unit, a training unit and a model update unit.

The training set construction unit is configured to construct a supervised training data set.

The training unit is configured to perform a supervised training on an initial depth estimation model by utilizing the supervised training data set to obtain a training loss.

The model update unit is configured to update the initial depth estimation model based on the training loss until the training loss meet a preset loss condition to obtain the trained target depth estimation model.

In accordance with a third aspect, an embodiment of the present application provides an electronic device, including a memory, a processor, and a computer program stored in the memory and executable on the processor. The processor, when executing the computer program, is configured to implement the method for the object volume calculation as described in the first aspect.

In accordance with a fourth aspect, an embodiment of the present application provides a computer-readable storage medium that stores a computer program. The computer program, when executed by a processor, causes the method for the object volume calculation as described in the first aspect to be implemented.

In accordance with a fifth aspect, an embodiment of the present application provides a computer program product. The computer program product, when run on an electronic device, causes the electronic device to execute the method for the object volume calculation as described in the first aspect.

### BENEFICAL EFFECTS

In the embodiments of the present application, the interior image of the cargo box is obtained through the camera, the interior image is input to the trained target depth estimation model, the depth information of the interior image is obtained by utilizing the trained target depth estimation model, and then the initial point clouds inside the cargo box are obtained according to the depth information and parameter information of the camera without the need to use high-cost lidar to collect point cloud information, which can reduce the measurement cost. The collection of point clouds is not affected by the material of the object. Then, the volume of the target object inside the cargo box is calculated according to the target point clouds that meet the preset condition in the initial point clouds. The solutions of the present application can effectively reduce the hardware cost of volume measurement and ensure that the precision and accuracy of measurement are not affected by the material of the object.

### DESCRIPTION OF DRAWINGS

In order to more clearly illustrate the technical solutions in the embodiments of the present application, the drawings needed to be used in the description of the embodiments or exemplary technologies will be briefly introduced below. Obviously, the drawings in the following description are merely some embodiments of the present application. For those of ordinary skill in the art, other drawings may be obtained based on these drawings without exerting creative efforts.
FIG. 1 is a flowchart for implementation of a method for an object volume calculation provided by an embodiment of the present application;
FIG. 2 is a flowchart for concrete implementation of training to obtain a trained target depth estimation model in the method for the object volume calculation provided by an embodiment of the present application;
FIG. 3 is a flowchart for concrete implementation of step S103 in the method for the object volume calculation provided by an embodiment of the present application;
FIG. 4 is a flowchart for concrete implementation of step S 104 in the method for the object volume calculation provided by an embodiment of the present application;
FIG. 5 is a schematic diagram of a scene for calculating the volume of a cuboid corresponding to a grid cell in the method for the object volume calculation provided by an embodiment of the present application;
FIG. 6 is a structural block diagram of an apparatus for an object volume calculation provided by an embodiment of the present application; and
FIG. 7 is a schematic diagram of an electronic device provided by an embodiment of the present application.

### DETAILED DESCRIPTION OF EMBODIMENTS

In order to make the objectives, technical solutions and advantages of the present application much clearer, the present application will be further described in detail below with reference to the drawings and embodiments. It should be understood that particular embodiments described here are intended only to explain the present invention and are not intended to limit the present application.

It will be understood that, when used in this specification and the appended claims, the term "comprising" indicates the presence of the described features, integers, steps, operations, elements and/or components but does not exclude the presence or addition of one or more other features, integers, steps, operations, elements, components and/or combinations thereof.

As used in this specification and the appended claims, the term "if" may be interpreted as "when" or "once" or "in response to determining" or "in response to detecting" depending on the context. Similarly, the phrase "if determined" or "if [the described condition or event] is detected" may be interpreted, depending on the context, to mean "once determined" or "in response to a determination" or "once [the described condition or event] is detected" or "in response to a detection of [the described condition or event]".

In addition, in the description of the present application and the appended claims, the terms "first", "second", "third", etc. are used only to distinguish the description, and cannot be understood as indicating or implying relative importance.

Reference in this specification to "one embodiment" or "some embodiments" or the like means that a particular feature, structure or characteristic described in connection with the embodiment is included in one or more embodiments of the application. Therefore, the phrases "in one embodiment", "in some embodiments", "in other embodiments", "in yet other embodiments", etc. appearing in different places in this specification do not necessarily all refer to the same embodiments, but rather, mean "one or more but not all embodiments", unless specifically stated otherwise. The terms "including," "includes," "having," and variations thereof all mean "including but not limited to," unless otherwise specifically emphasized.

At present, the logistics industry generally uses lidar to measure the volume of objects in the cargo box. The objects inside the cargo box are scanned by laser, thereby, point cloud data is obtained, and then the volume measurement is performed based on the point cloud data. However, the cost of lidar to measure the volume of objects is high, and the reflectivity of lidar for special objects such as a black object and a glass product is low, which can easily lead to inaccurate measurements and cannot guarantee the precision and accuracy of object volume measurement, which will affect the classification and storage of objects, and then the logistics efficiency is reduced.

To address this problem, embodiments of the present application provide a method and an apparatus for an object volume calculation, an electronic device, and a storage medium, which can effectively reduce the hardware cost of volume measurement and ensure that the precision and accuracy of measurement are not affected by the material of the object. For more specific technical implementation details of the embodiments of the present application, please refer to various embodiments described below.

The method for the object volume calculation provided by the embodiments of the present application may be applied to various types of electronic devices that need to perform object volume calculations, and the electronic device may specifically include a smart vehicle terminal, a mobile phone, a tablet, a wearable device, a notebook computer, a desktop computer, a server, etc.

To illustrate the technical solutions provided by the present application, a detailed description will be given below with reference to particular drawings and embodiments.

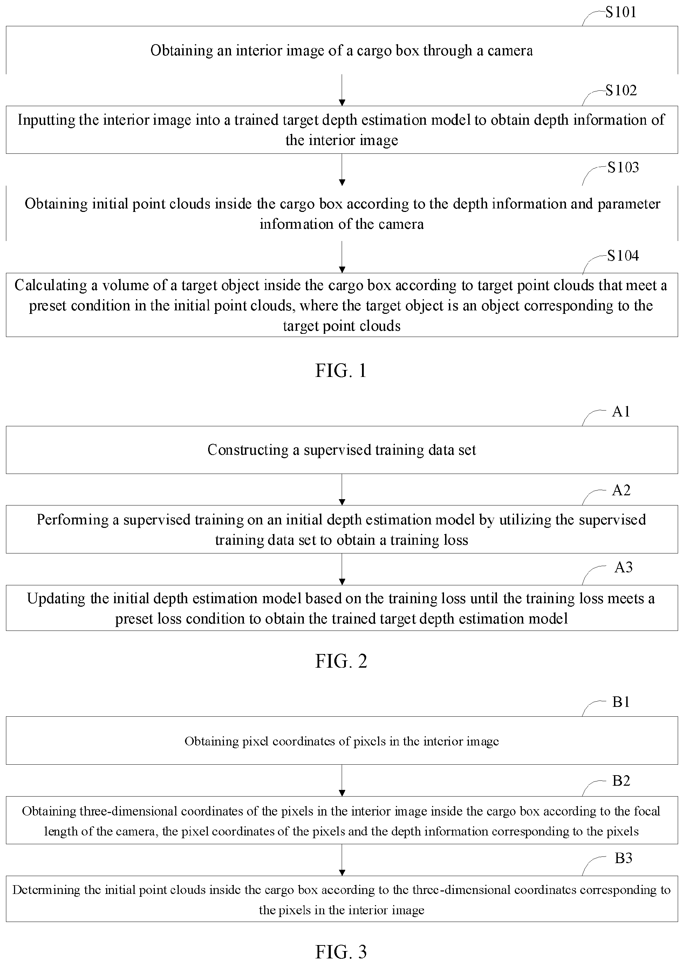

FIG. 1 shows an implementation process of a method for an object volume calculation provided by an embodiment of the present application. The process of the method includes steps S101 to S104. Implementation principles of each step are specifically described as follows:
In step S101: an interior image of a cargo box is obtained through a camera.

In this embodiment, a single-lens reflex camera (SLR) is applied to obtain the image inside the cargo box. When the single-lens reflex camera takes a view, the light from the subject is focused through the lens and reflected by the tilted reflector onto a focusing screen to form an image. The cost of a single-lens reflex camera is low. Using the single-lens reflex camera to collect images and then determine the point cloud information inside the cargo box can help reduce costs, thereby the hardware cost of volume measurement can be effectively reduced. The type and model of the single-lens reflex camera may be determined according to actual application requirements. This embodiment does not impose any restrictions on the type, model or even brand of the single-lens reflex camera.

In step S102, the interior image is input into a trained target depth estimation model to obtain depth information of the interior image.

The target depth estimation model is a neural network model that is trained and used to estimate the depth information. In this embodiment, the target depth estimation model is utilized to obtain the depth information without the need to use expensive laser radar or other hardware equipment, that is, the 3D point cloud can be obtained by converting the 2D information of an image, which thus can effectively reduce the hardware costs.

Generally, laser point cloud data may be used as true values to train a neural network model to obtain a depth estimation model for estimating depth information. However, this method requires spatio-temporal calibration of images and laser point cloud data, which is difficult to operate and has low training efficiency.

As a possible implementation of the present application, FIG. 2 shows a concrete implementation flowchart for training to obtain a trained target depth estimation model in the method for the object volume calculation provided by an embodiment of the present application. The details are as follows:
A1: Constructing a supervised training data set.

The supervised training data set includes sample video images and sample depth images. Specifically, a sample video image of the interior of the cargo box is collected. The sample video image contains the object inside the cargo box. The sample video image is input to the DINOV2 depth estimation large model to obtain the corresponding sample depth image (or sample depth value). The supervised training data set containing sample video images and sample depth images (or sample depth values) is constructed according to the sample video images and sample depth images (or sample depth values).

For example, the supervised training data set includes RGB images collected by a camera and corresponding depth images containing distance information. Firstly, the RGB images of the interior of the cargo box are collected and displayed. The collected RGB images are input into the DINOV2 depth estimation large model to obtain depth images (or sample depth values) containing distance information, and then the supervised training data set is constructed based on these RGB images and corresponding depth images (or sample depth values).

Depth images of distance information are generally obtained by using LIDAR point cloud data as true values, such collection manner is more expensive. In the embodiments of the present application, the DINOV2 depth estimation large model is utilized to obtain the depth images containing distance information, which can effectively reduce costs.

A2: Performing supervised training on an initial depth estimation model by utilizing the supervised training data set to obtain a training loss.

In this embodiment, the sample video image in the supervised training data set is used as the input of the initial depth estimation model to obtain a first depth image output by the initial depth estimation model. The minimization loss function may be utilized to predict the loss between the first depth image of the initial depth estimation model and the sample depth image corresponding to the sample video image in the supervised training data set, so that the training loss for supervised training of the initial depth estimation model is obtained.

A3: Updating the initial depth estimation model based on the training loss until the training loss meets a preset loss condition to obtain the trained target depth estimation model.

In a possible implementation, the initial depth estimation model is updated based on the training loss by means of a backpropagation approach.

For example, a parameter gradient is set for each convolution kernel in the initial depth estimation model. When the backpropagation is used, a corresponding gradient is set for each model parameter that needs to be updated in the initial depth estimation model. In the process of updating the initial depth estimation model based on the training loss, the model parameters can be optimized according to this gradient so as to reduce the loss, so that when the training loss is less than or equal to the preset loss threshold, the trained target depth estimation model is obtained.

In the embodiment of the present application, the trained target depth estimation model is utilized to determine the depth information of the interior image of the cargo box. No additional equipment is needed. The process is simple and the implementation efficiency is high. The target depth estimation model obtained by combining supervised learning with unsupervised learning has higher accuracy, which can effectively improve the accuracy of depth information collection and avoid the influence of object material on the depth information collection.

In step S103, initial point clouds inside the cargo box are obtained based on the depth information and parameter information of the camera.

In this embodiment, the depth information and camera parameters are combined to obtain the initial point clouds inside the cargo box. The initial point clouds include point clouds for the cargo box and point clouds for object(s) inside the cargo box.

The parameter information of the camera includes a focal length. As a possible implementation of the present application, FIG. 3 shows a specific implementation process of obtaining the initial point clouds inside the cargo box based on the depth information and the parameter information of the camera, in the method for the object volume calculation provided by the embodiment of the present application, which is detailed as follows:
B1: Obtaining pixel coordinates of pixels in the interior image. The pixel coordinates are two-dimensional coordinates.
B2: Obtaining three-dimensional coordinates of the pixels in the interior image inside the cargo box according to the focal length of the camera, the pixel coordinates of the pixels and the depth information corresponding to the pixels. The three-dimensional coordinates are the position coordinates of the pixel coordinates in the world coordinate system.

In the embodiment of the present application, the three-dimensional coordinates corresponding to the pixel coordinate P (u, v) are determined according to the following formula (1): $x = \frac{u - {c}_{u}}{{f}_{u}} , y = \frac{ν - {c}_{ν}}{{f}_{ν}} , z = D \left(u, ν\right)$ (1)

In this formula, u represents the abscissa coordinate of the pixel in the interior image in the pixel coordinate system, v represents the vertical coordinate of the pixel in the interior image in the pixel coordinate system, and z represents the depth information corresponding to the pixel in the interior image (the depth information is obtained based on the above target depth estimation model) *c_{U}* and c*_{V}* are the center coordinate of the pixel coordinate system (generally the center of the picture), *f_{U}* and *f_{V}* respectively represent the focal length of the camera in the x-axis direction and y-axis direction in the world coordinate system. x is the position information of the pixel P (u, v) on the transverse x-axis of the world coordinate system, and y is the position information of the pixel P (u, v) on the longitudinal y-axis of the world coordinate system. According to the above formula (1), the three-dimensional coordinates P (x, y, z) corresponding to the pixel P (u, v) in the interior image can be obtained.

B3: Determining the initial point clouds inside the cargo box according to the three-dimensional coordinates corresponding to the pixels in the interior image.

According to the three-dimensional coordinates corresponding to the pixels in the interior image, the interior image is spatially transformed to obtain the initial point clouds including the cargo box point clouds and the target object point clouds. The target object refers to an object inside the cargo box.

In this embodiment, the initial point clouds are determined through a combination of the interior image of the cargo box captured by the camera, the depth information determined by utilizing the target depth estimation model, and the parameter information of the camera without the need to use expensive laser radar, which can effectively reduce costs.

In step S104, a volume of a target object inside the cargo box is calculated according to target point clouds that satisfy a preset condition in the initial point clouds, and the target object is an object corresponding to the target point clouds.

The target point clouds that meet the preset condition is the point clouds of the target object. Since the initial point clouds include the cargo box point clouds, in this embodiment, the initial point clouds are filtered by setting the preset condition, and point clouds that meet the preset condition is determined as the target point clouds, that is, the point clouds corresponding to the target object.

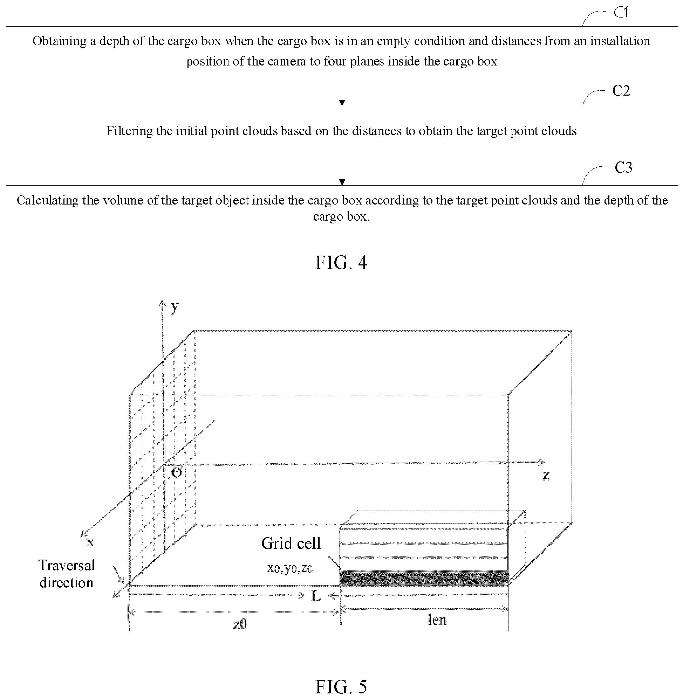

As a possible implementation of the present application, FIG. 4 shows a specific implementation process of step S104 in the method for the object volume calculation provided by the embodiment of the present application. The details are as follows:
C1: Obtaining a depth of the cargo box when the cargo box is in an empty condition and distances from an installation position of the camera to four planes inside the cargo box. Among them, the four planes inside the cargo box are respectively the left plane inside the cargo box, the right plane inside the cargo box, the top plane of the cargo box, and the bottom plane of the cargo box.
C2: Filtering the initial point clouds based on the distances to obtain the target point clouds. The distances are the distances from the installation position of the camera to the four planes inside the cargo box.

In this embodiment, the distances from the camera to the four planes inside the cargo box are particularly obtained. The four planes are the left plane inside the cargo box, the right plane inside the cargo box, the top plane of the cargo box, and the bottom plane of the cargo box. The distances from the installation position of the camera to the four planes inside the cargo box include: a first distance from the camera to the left plane inside the cargo box, a second distance from the camera to the right plane inside the cargo box, a third distance from the camera to the top plane of the cargo box, and a fourth distance from the camera to the bottom plane of the cargo box. By means of a relationship between the distance from the three-dimensional coordinates in the initial point clouds to a corresponding plane and the distance from the camera to the corresponding plane, the initial point clouds are filtered to obtain the target point clouds.

As a possible implementation of the present application, the initial point clouds are projected onto a two-dimensional plane along a direction, specifically, the initial point clouds are projected onto a two-dimensional plane along a direction from the installation position of the camera toward the bottom of the cargo box, to obtain a two-dimensional point coordinate set, and two-dimensional point coordinates in the two-dimensional point coordinate set are discretely converted according to a preset size to obtain discretized grid cells, where one grid cell includes several dense two-dimensional point coordinates. The discretized grid cells are traversed to determine whether the grid coordinates corresponding to the grid cells are within the distances from the installation position of the camera to the four planes inside the cargo box, the point clouds corresponding to the grid cells that exceed the distance are filtered out from the initial point clouds, and the remaining point clouds in the initial point clouds are determined as the target point clouds. Among them, the operation of determining whether the grid coordinates corresponding to the grid cell are within the distances from the installation position of the camera to the four planes inside the cargo box is to determine whether the grid coordinates corresponding to the grid cell are within the first distance, the second distance, the third distance or the fourth distance. If the grid coordinates are within any of the first distance, the second distance, the third distance and the fourth distance, the grid coordinates corresponding to the grid cell are determined to be within the distances from the installation position of the camera to the four planes inside the cargo box. If none of the grid coordinates is within the first distance, the second distance, the third distance or the fourth distance, then it is determined that the grid coordinates corresponding to the grid cell are not within the distances from the installation position of the camera to the four planes inside the cargo box.

In this embodiment, all three-dimensional coordinates in the initial point clouds are projected onto a two-dimensional plane to obtain a two-dimensional point coordinate set on the two-dimensional plane. The two-dimensional point coordinates are discretely transformed according to the preset size. The size may be customized, for example, the two-dimensional point coordinates are discretized according to a size of 0.1 m × 0.1 m, and the continuous two-dimensional point coordinates in the two-dimensional point coordinate set are converted into discretized grid cells. The plane area of the grid cell is determined based on the preset size.

In some implementations, starting from the bottom of the cargo box, a coordinate system is constructed with the installation position of the camera as the center, and the discretized grid cells are traversed in order from left to right and bottom to top to determine whether the grid coordinates corresponding to the grid cell are within the distances between the camera and the planes of the cargo box. The point clouds corresponding to the grid cells beyond the distances between the camera and the planes inside of the cargo box is marked as the cargo box point clouds. The point clouds corresponding to the grid cells within the distances between the camera and the planes inside of the cargo box is marked as the target point clouds.

In some embodiments, the grid cell includes several dense two-dimensional point coordinates, a central two-dimensional point of the several dense two-dimensional point coordinates is determined, and the central two-dimensional point is determined as the grid coordinates of the grid cell.

C3: Calculating the volume of the target object inside the cargo box based on the target point clouds and the depth of the cargo box.

In this embodiment of the present application, the volume of the target object can be calculated based on the target point clouds corresponding to the target object.

In a possible implementation, a target grid cell is filled according to the depth information, and the volume of a cuboid corresponding to the target grid cell is calculated based on the depth of the cargo box, and the target grid cell is a grid cell corresponding to a target point cloud. The volume of the target object is calculated according to the volume of the cuboid corresponding to the target grid cell and the number of the target grid cell.

Exemplarily, as shown in FIG. 5, a grid cell marked as a target grid cell is filled with a depth value z0 to obtain a cuboid. Based on the difference between the depth L of the cargo box and the depth value z0 in the depth information, the cuboid can be determined. The length len, combined with the preset size of the grid cell x0×y0, can be used to calculate the volume of the cuboid. For example, if the preset size of the grid cell is 0.1 × 0.1, the volume of the corresponding cuboid of the grid cell is 0.1 × 0.1 × len, len = (L - z0), and then the volume of the target object inside the cargo box can be obtained by accumulating the volumes of all target grid cells.

As can be seen from the above, in the embodiment of the present application, the interior image of the cargo box is acquired through a camera, the interior image is input to the trained target depth estimation model, and the depth information of the interior image is obtained by utilizing the trained target depth estimation model, and then the initial point clouds inside the cargo box are obtained according to the depth information and the parameter information of the camera without the need to use high-cost lidar to collect point cloud information, which can reduce measurement costs. The collection of point clouds is not affected by the material of the object. Then, the volume of the target object inside the cargo box is calculated based on the target point clouds that meet the preset condition in the initial point clouds. The solutions in the present application can effectively reduce the hardware cost of volume measurement and ensure that the precision and accuracy of measurement are not affected by the material of the object.

It should be understood that the sequence number of each step in the above embodiment does not mean the order of execution. The execution order of each process should be determined by its function and internal logic, and should not constitute any limitation on the implementation process of the embodiment of the present application.

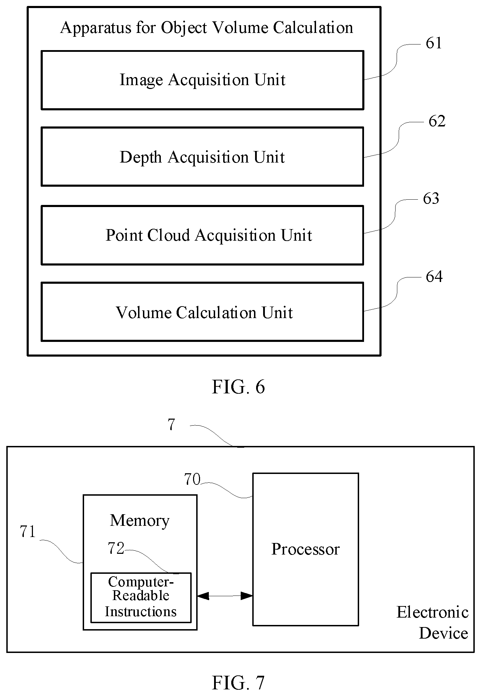

Corresponding to the method for the object volume calculation described in the above embodiment, FIG. 6 shows a structural block diagram of an apparatus for an object volume calculation provided by an embodiment of the present application. For convenience of explanation, only the parts related to the embodiment of the present application are shown.

Referring to FIG. 6, the apparatus for the object volume calculation includes: an image acquisition unit 61, a depth acquisition unit 62, a point cloud acquisition unit 63, and a volume calculation unit 64, wherein:
The image acquisition unit 61 is configured to obtain an interior image of a cargo box through a camera;

The depth acquisition unit 62 is configured to input the interior image to a trained target depth estimation model to obtain depth information of the interior image.

The point cloud acquisition unit 63 is configured to obtain initial point clouds inside the cargo box according to the depth information and parameter information of the camera.

The volume calculation unit 64 is configured to calculate a volume of a target object inside the cargo box according to target point clouds that meet a preset condition in the initial point clouds, and the target object is an object corresponding to the target point clouds.

As a possible implementation of the present application, the apparatus also includes: a training set construction unit, a training unit, and a model update unit.

The training set construction unit is configured to construct a supervised training data set.

The training unit is configured to perform a supervised training on an initial depth estimation model using the supervised training data set to obtain a training loss;
The model update unit is configured to update the initial depth estimation model based on the training loss until the training loss meets a preset loss condition to obtain the trained target depth estimation model.

As a possible implementation of the present application, the parameter information includes a focal length, and the point cloud acquisition unit 63 is particularly configured to: obtain pixel coordinates of the pixels in the interior image; obtain three-dimensional coordinates of the pixels in the interior image inside the cargo box according to the focal length of the camera, the pixel coordinates of the pixels and the depth information corresponding to the pixels; and determine the initial point clouds inside the cargo box according to the three-dimensional coordinates corresponding to the pixels in the interior image.

As a possible implementation of the present application, the volume calculation unit 64 includes: a camera distance acquisition module, a point cloud filtering module and a volume calculation module.

The camera distance acquisition module is configured to obtain a depth of the cargo box when the cargo box is in an empty condition, and distances from an installation position of the camera to four planes inside the cargo box.

The point cloud filtering module is configured to filter the initial point clouds based on the distances to obtain the target point clouds.

The volume calculation module is configured to calculate the volume of the target object inside the cargo box based on the target point clouds and the depth of the cargo box.

As a possible implementation of the present application, the point cloud filtering module is particularly configured to: project the initial point clouds to a two-dimensional plane to obtain a two-dimensional point coordinate set; perform discrete conversion processing on the two-dimensional point coordinates in the two-dimensional point coordinate set according to a preset size to obtain discretized grid cells; and traverse the discretized grid cells to determine whether the grid coordinates corresponding to the grid cells are within the distances; and filter out point clouds corresponding to grid cells exceeding the distances from the initial point clouds, and determine remaining point clouds in the initial point clouds are as the target point clouds.

As a possible implementation of the present application, the volume calculation module is particularly configured to: fill a target grid cell according to the depth information, and calculating a volume of a cuboid corresponding to the one target grid cell based on the depth of the cargo box, where the target grid cell are a grid cell corresponding to a target point cloud; and calculate the volume of the target object according to the volume of the cuboid corresponding to the target grid cell and the number of the target grid cell.

As can be seen from the above, in the embodiments of the present application, the interior image of the cargo box is obtained through a camera, the interior image is input to the trained target depth estimation model, the depth information of the interior image is obtained by utilizing the trained target depth estimation model, and then the initial point clouds inside the cargo box is obtained by utilizing the depth information and the parameter information of the camera without the need to use high-cost lidar to collect point cloud information, which can reduce measurement costs. The collection of point clouds is not affected by the material of the object. Then, the volume of the target object inside the cargo box is determined based on the target point clouds that meets the preset condition in the initial point cloud. The solutions of the present application can effectively reduce the hardware cost of volume measurement and ensure that the precision and accuracy of measurement are not affected by the material of the object.

It should be noted that the information interaction, execution process, etc. between the above-mentioned apparatuses/units are based on the same concept as the method embodiments of the present application. For details of the specific functions and technical effects of the apparatus embodiments, references may be made to the above method embodiments. No further details will be given here.

An embodiment of the present application also provides a computer-readable storage medium. The computer-readable storage medium stores computer-readable instructions. The computer-readable instructions when executed by a processor, enables steps of any one of the above methods for the object volume calculation shown in FIGS. 1 to 5 to be implemented.

An embodiment of the present application also provides an electronic device which includes a memory, a processor, and computer-readable instructions stored in the memory and executable on the processor. The processor when executing the computer-readable instructions is configured to implement the steps of any of the methods for the object volume calculation shown in FIGS. 1 to 5.

An embodiment of the present application also provides a computer-readable instruction product. When the computer-readable instruction product is run on an electronic device, it causes the electronic device to execute the steps of implementing any of the methods for the object volume calculation shown in FIGS. 1 to 5.

FIG. 7 is a schematic diagram of an electronic device provided by an embodiment of the present application. As shown in FIG. 7, the electronic device 7 of this embodiment includes: a processor 70, a memory 71, and computer-readable instructions 72 stored in the memory 71 and executable on the processor 70. The processor 70, when executing the computer readable instructions 72, is configured to implement the steps of the method for the object volume calculation in each of the above embodiments, such as steps S101 to S104 shown in FIG. 1. Alternatively, the processor 70, when executing the computer readable instructions 72, is configured to implement the functions of each module/unit in each of the above apparatus embodiments, such as the functions of the units 61 to 64 shown in FIG. 6.

Exemplarily, the computer readable instructions 72 may be divided into one or more modules/units, the one or more modules/units are stored in the memory 71 and executed by the processor 70, to implement the embodiments of the present application. The one or more modules/units may be a series of computer-readable instruction segments capable of implementing specific functions. The instruction segments are used to describe the execution process of the computer-readable instructions 72 in the electronic device 7.

The electronic device 7 may include, but is not limited to, a processor 70 and a memory 71. Those skilled in the art can understand that FIG. 7 is only an example of the electronic device 7 and does not constitute a limitation of the electronic device 7. More or fewer components may be included than shown in the figures, or some components may be combined, or different components may be used., for example, the electronic device 7 may also include input and output devices, network access devices, buses, etc.

The processor 70 may be a central processing unit (CPU), or other general-purpose processor, a digital signal processor (DSP), an application specific integrated circuit (ASIC), a field-programmable gate array (FPGA) or other programmable logic devices, discrete gates or transistor logic devices, discrete hardware components, etc. A general-purpose processor may be a microprocessor or the processor may be any conventional processor, etc.

The memory 71 may be an internal storage unit of the electronic device 7, such as a hard disk or an internal storage of the electronic device 7. The memory 71 may also be an external storage device of the electronic device 7, such as a plug-in hard disk, a smart media card (SMC), or a secure digital (SD) card, flash card, etc., equipped on the electronic device 7. Further, the memory 71 may also include both an internal storage unit of the electronic device 7 and an external storage device. The memory 71 is configured to store the computer readable instructions and other programs and data required by the electronic device. The memory 71 may also be configured to temporarily store data that has been output or is to be output.

It can be clearly understood by those skilled in the art that, for the convenience and simplicity of description, only the division of the above functional units and modules is illustrated by example. In actual applications, the implementation of the above functions may be allocated to different functional units and modules according to actual needs, that is, the internal structure of the apparatus may be divided into different functional units or modules to complete all or part of the functions described above. Each functional unit and module in the embodiment may be integrated into one processing unit, or each unit may exist physically alone, or two or more units may be integrated into one unit. The integrated unit may be realized either in the form of hardware or in the form of software functional units. In addition, the specific names of each functional unit and module are only for the convenience of distinguishing each other and are not intended to limit the protection scope of the present application. For specific working processes of the units and modules in the above system, references may be made to the corresponding processes in the foregoing method embodiments, which will not be described again here.

If the integrated unit is implemented in the form of a software functional unit and sold or used as an independent product, the integrated unit may be stored in a computer-readable storage medium. Based on this understanding, the present application may implement all or part of the processes in the methods of the above embodiments by instructing relevant hardware through computer-readable instructions. The computer-readable instructions may be stored in a computer-readable storage medium, and the steps of each of the above method embodiments can be implemented when the computer-readable instructions are executed by the processor. Among them, the computer-readable instructions include computer-readable instruction codes, and the computer-readable instruction codes may be in a form of source codes, a form of object codes, executable files or some intermediate forms, etc. The computer-readable medium may at least include: any entity or device capable of carrying computer-readable instruction codes to an apparatus/terminal device, a recording medium, a computer memory, a read-only memory (ROM), a random-access memory (RAM,), electrical carrier signals, telecommunications signals, and software distribution media. For example, U disk, a mobile hard disk, a magnetic disk or CD, etc. In some jurisdictions, subject to legislation and patent practice, computer-readable media may not be electrical carrier signals and telecommunications signals.

In the above embodiments, each embodiment is described with its own emphasis. For parts that are not detailed or documented in a certain embodiment, references may be made to the relevant descriptions of other embodiments.

The above-described embodiments are intended only to illustrate the technical solutions of the present application, rather than limiting the present application. Although the present application has been described in detail with reference to the foregoing embodiments, it should be understood by those of ordinary skill in the art that the technical solutions described in the above-mentioned embodiments may still be modified, or some of the technical features in these embodiments are equivalently substituted.

## Claims

1. A method for an object volume calculation, comprising:
obtaining (S101) an interior image of a cargo box through a camera;
inputting (S102) the interior image into a trained target depth estimation model to obtain depth information of the interior image;
obtaining (S103) initial point clouds inside the cargo box according to the depth information and parameter information of the camera; and
calculating (S104) a volume of a target object inside the cargo box according to target point clouds that meet a preset condition in the initial point clouds, wherein the target object is an object corresponding to the target point clouds,
**characterized in that**, said calculating (S104) the volume of the target object inside the cargo box according to the target point clouds that meet preset condition in the initial point cloud comprises:
obtaining a depth of the cargo box when the cargo box is in an empty condition and distances from an installation position of the camera to four planes inside the cargo box, wherein the four planes inside the cargo box are respectively a left plane, a right plane, a top plane, and a bottom plane inside the cargo box;
projecting the initial point clouds to a two-dimensional plane to obtain a two-dimensional point coordinate set;
performing a discrete conversion processing on two-dimensional point coordinates in the two-dimensional point coordinate set according to a preset size to obtain discretized grid cells;
constructing a coordinate system with the installation position of the camera as a center, and traversing, starting from the bottom plane of the cargo box, the discretized grid cells in an order from left to right and bottom to top, to determine whether the grid coordinates corresponding to the discretized grid cells are within the distances;
filtering out point clouds corresponding to grid cells exceeding the distances from the initial point clouds, and determining remaining point clouds in the initial point clouds as the target point clouds; and
calculating the volume of the target object inside the cargo box according to the target point clouds and the depth of the cargo box.

2. The method according to claim 1, **characterized in that**, the parameter information comprises a focal length; and said obtaining (S103) the initial point clouds inside the cargo box according to the depth information and the parameter information of the camera comprises:
obtaining (B1) pixel coordinates of pixels in the interior image;
obtaining (B2) three-dimensional coordinates of the pixels in the interior image inside the cargo box according to the focal length of the camera, the pixel coordinates of the pixels and the depth information corresponding to the pixels; and
determining (B3) the initial point clouds inside the cargo box according to the three-dimensional coordinates corresponding to the pixels in the interior image.

3. The method according to claim 1, **characterized in that**, said calculating (S104) the volume of the target object inside the cargo box according to the target point clouds comprises:
filling a target grid cell according to the depth information, and calculating a volume of a cuboid corresponding to the target grid cell based on the depth of the cargo box, wherein the target grid cell is a grid cell corresponding to the target point clouds; and
calculating the volume of the target object according to the volume of the cuboid corresponding to the target grid cell and a number of the target grid cell.

4. The method according to claim 1, **characterized in that**, the method further comprises:
constructing (A1) a supervised training data set;
performing (A2) a supervised training on an initial depth estimation model by utilizing the supervised training data set to obtain a training loss; and
updating (A3) the initial depth estimation model based on the training loss until the training loss meets a preset loss condition, to obtain the trained target depth estimation model.

5. An apparatus for an object volume calculation, comprising:
an image acquisition unit (61), configured to obtain an interior image of a cargo box through a camera;
a depth acquisition unit (62), configured to input the interior image into a trained target depth estimation model to obtain depth information of the interior image;
a point cloud acquisition unit (63), configured to obtain initial point clouds inside the cargo box according to the depth information and parameter information of the camera; and
a volume calculation unit (64), configured to calculate a volume of a target object inside the cargo box according to target point clouds that meet a preset condition in the initial point clouds, wherein the target object is an object corresponding to the target point clouds,
**characterized in that**, the volume calculation unit (64) comprises:
a camera distance acquisition module, configured to obtain a depth of the cargo box when the cargo box is in an empty condition, and distances from an installation position of the camera to four planes inside the cargo box, wherein the four planes inside the cargo box are respectively a left plane, a right plane, a top plane, and a bottom plane inside the cargo box;
a point cloud filtering module, configured to:
project the initial point clouds to a two-dimensional plane to obtain a two-dimensional point coordinate set;
perform a discrete conversion processing on two-dimensional point coordinates in the two-dimensional point coordinate set according to a preset size to obtain discretized grid cells;
construct a coordinate system with the installation position of the camera as a center, and traverse, starting from the bottom plane of the cargo box, the discretized grid cells in an order from left to right and bottom to top, to determine whether the grid coordinates corresponding to the discretized grid cells are within the distances; and
filter out point clouds corresponding to grid cells exceeding the distances from the initial point cloud, and determine remaining point clouds in the initial point clouds as the target point clouds; and
a volume calculation module, configured to calculate the volume of the target object inside the cargo box according to the target point clouds and the depth of the cargo box.

6. The apparatus according to claim 5, **characterized in that**, the parameter information comprises a focal length, and the point cloud acquisition unit (63) is configured to:
obtain pixel coordinates of pixels in the interior image;
obtain three-dimensional coordinates of the pixels in the interior image inside the cargo box according to the focal length of the camera, the pixel coordinates of the pixels and the depth information corresponding to the pixels; and
determine the initial point clouds inside the cargo box according to the three-dimensional coordinates corresponding to the pixels in the interior image.

7. The apparatus according to claim 5, **characterized in that**, the volume calculation module (64) is configured to:
fill a target grid cell according to the depth information, and calculate a volume of a cuboid corresponding to the target grid cell based on the depth of the cargo box, wherein the target grid cell is a grid cell corresponding to the target point clouds; and
calculate the volume of the target object according to the volume of the cuboid corresponding to the target grid cell and a number of the target grid cell.

8. The apparatus according to claim 5, **characterized in that**, the apparatus further comprises:
a training set construction unit, configured to construct a supervised training data set;
a training unit, configured to perform a supervised training on an initial depth estimation model by utilizing the supervised training data set to obtain a training loss; and
a model update unit, configured to update the initial depth estimation model based on the training loss until the training loss meets a preset loss condition to obtain the trained target depth estimation model.

9. An electronic device (7), comprising a memory (71), a processor (70) and computer-readable instructions (72) stored in the memory (71) and executable on the processor (70), **characterized in that**, the processor (70), when executing the computer-readable instructions (72), is configured to implement the method for the object volume calculation according to any one of claims 1 to 4.

10. A computer-readable storage medium storing computer-readable instructions (72), **characterized in that**, the computer-readable instructions (72), when executed by a processor (70), cause the method for the object volume calculation according to any one of claims 1 to 4 to be implemented.

## Patentansprüche

1. Verfahren für eine Objektvolumenberechnung, das Folgendes umfasst:
Erhalten (S101) eines Innenraumbilds eines Laderaums durch eine Kamera;
Eingeben (S102) des Innenraumbilds in ein trainiertes Zieltiefenschätzungsmodell, um Tiefeninformationen des Innenraumbilds zu erhalten;
Erhalten (S103) ursprünglicher Punktwolken innerhalb des Laderaums in Abhängigkeit von den Tiefeninformationen und Parameterinformationen der Kamera; und
Berechnen (S104) eines Volumens eines Zielobjekts innerhalb des Laderaums in Abhängigkeit von Zielpunktwolken, die eine voreingestellte Bedingung in den ursprünglichen Punktwolken erfüllen, wobei das Zielobjekt ein den Zielpunktwolken entsprechendes Objekt ist,
**dadurch gekennzeichnet, dass** das Berechnen (S104) des Volumens des Zielobjekts innerhalb des Laderaums in Abhängigkeit von den Zielpunktwolken, die eine voreingestellte Bedingung in der ursprünglichen Punktwolke erfüllen, Folgendes umfasst:
Erhalten einer Tiefe des Laderaums, wenn der Laderaum in einem leeren Zustand ist, und von Abständen von einer Einbauposition der Kamera zu vier Ebenen innerhalb des Laderaums, wobei die vier Ebenen innerhalb des Laderaums jeweils eine linke Ebene, eine rechte Ebene, eine obere Ebene und eine untere Ebene innerhalb des Laderaums sind;
Projizieren der ursprünglichen Punktwolken auf eine zweidimensionale Ebene, um einen Satz zweidimensionaler Punktkoordinaten zu erhalten;
Durchführen einer diskreten Umwandlungsverarbeitung an zweidimensionalen Punktkoordinaten in dem Satz zweidimensionaler Punktkoordinaten in Abhängigkeit von einer voreingestellten Größe, um diskretisierte Gitterzellen zu erhalten;
Erstellen eines Koordinatensystems mit der Einbauposition der Kamera als Zentrum und Durchlaufen, ausgehend von der unteren Ebene des Laderaums, der diskretisierten Gitterzellen in einer Reihenfolge von links nach rechts und von unten nach oben, um zu bestimmen, ob die den diskretisierten Gitterzellen entsprechenden Gitterkoordinaten innerhalb der Abstände liegen;
Herausfiltern von Punktwolken, die Gitterzellen entsprechen, die die Abstände von den ursprünglichen Punktwolken überschreiten, und Bestimmen verbleibender Punktwolken in den ursprünglichen Punktwolken als die Zielpunktwolken; und
Berechnen des Volumens des Zielobjekts innerhalb des Laderaums in Abhängigkeit von den Zielpunktwolken und der Tiefe des Laderaums.

2. Verfahren nach Anspruch 1, **dadurch gekennzeichnet, dass** die Parameterinformationen eine Brennweite umfassen; und das Erhalten (S103) der ursprünglichen Punktwolken innerhalb des Laderaums in Abhängigkeit von den Tiefeninformationen und den Parameterinformationen der Kamera Folgendes umfasst:
Erhalten (B1) von Pixelkoordinaten von Pixeln in dem Innenraumbild;
Erhalten (B2) dreidimensionaler Koordinaten der Pixel in dem Innenraumbild innerhalb des Laderaums in Abhängigkeit von der Brennweite der Kamera, den Pixelkoordinaten der Pixel und den den Pixeln entsprechenden Tiefeninformationen; und
Bestimmen (B3) der ursprünglichen Punktwolken innerhalb des Laderaums in Abhängigkeit von den den Pixeln in dem Innenraumbild entsprechenden dreidimensionalen Koordinaten.

3. Verfahren nach Anspruch 1, **dadurch gekennzeichnet, dass** das Berechnen (S104) des Volumens des Zielobjekts innerhalb des Laderaums in Abhängigkeit von den Zielpunktwolken Folgendes umfasst:
Füllen einer Zielgitterzelle in Abhängigkeit von den Tiefeninformationen und Berechnen eines Volumens eines der Zielgitterzelle entsprechenden Quaders basierend auf der Tiefe des Laderaums, wobei die Zielgitterzelle eine den Zielpunktwolken entsprechende Gitterzelle ist; und
Berechnen des Volumens des Zielobjekts in Abhängigkeit von dem Volumen des der Zielgitterzelle entsprechenden Quaders und einer Anzahl der Zielgitterzelle.

4. Verfahren nach Anspruch 1, **dadurch gekennzeichnet, dass** das Verfahren ferner Folgendes umfasst:
Erstellen (A1) eines Datensatzes eines überwachten Trainings;
Durchführen (A2) eines überwachten Trainings an einem ursprünglichen Tiefenschätzungsmodell unter Verwendung des Datensatzes eines überwachten Trainings, um einen Trainingsverlust zu erhalten; und
Aktualisieren (A3) des ursprünglichen Tiefenschätzungsmodells basierend auf dem Trainingsverlust, bis der Trainingsverlust eine voreingestellte Verlustbedingung erfüllt, um das trainierte Zieltiefenschätzungsmodell zu erhalten.

5. Vorrichtung für eine Objektvolumenberechnung, die Folgendes umfasst:
eine Bilderfassungseinheit (61), die dazu konfiguriert ist, ein Innenraumbild eines Laderaums durch eine Kamera zu erhalten;
eine Tiefenerfassungseinheit (62), die dazu konfiguriert ist, das Innenraumbild in ein trainiertes Zieltiefenschätzungsmodell einzugeben, um Tiefeninformationen des Innenraumbilds zu erhalten;
eine Punktwolkenerfassungseinheit (63), die dazu konfiguriert ist, ursprüngliche Punktwolken innerhalb des Laderaums in Abhängigkeit von den Tiefeninformationen und Parameterinformationen der Kamera zu erhalten; und
eine Volumenberechnungseinheit (64), die dazu konfiguriert ist, ein Volumen eines Zielobjekts innerhalb des Laderaums in Abhängigkeit von Zielpunktwolken, die eine voreingestellte Bedingung in den ursprünglichen Punktwolken erfüllen, zu berechnen, wobei das Zielobjekt ein den Zielpunktwolken entsprechendes Objekt ist,
**dadurch gekennzeichnet, dass** die Volumenberechnungseinheit (64) Folgendes umfasst:
ein Kameraabstandserfassungsmodul, das dazu konfiguriert ist, eine Tiefe des Laderaums, wenn der Laderaum in einem leeren Zustand ist, und Abstände von einer Einbauposition der Kamera zu vier Ebenen innerhalb des Laderaums zu erhalten, wobei die vier Ebenen innerhalb des Laderaums jeweils eine linke Ebene, eine rechte Ebene, eine obere Ebene und eine untere Ebene innerhalb des Laderaums sind;
ein Punktwolkenfiltermodul, das zu Folgendem konfiguriert ist:
Projizieren der ursprünglichen Punktwolken auf eine zweidimensionale Ebene, um einen Satz zweidimensionaler Punktkoordinaten zu erhalten;
Durchführen einer diskreten Umwandlungsverarbeitung an zweidimensionalen Punktkoordinaten in dem Satz zweidimensionaler Punktkoordinaten in Abhängigkeit von einer voreingestellten Größe, um diskretisierte Gitterzellen zu erhalten;
Erstellen eines Koordinatensystems mit der Einbauposition der Kamera als Zentrum und Durchlaufen, ausgehend von der unteren Ebene des Laderaums, der diskretisierten Gitterzellen in einer Reihenfolge von links nach rechts und von unten nach oben, um zu bestimmen, ob die den diskretisierten Gitterzellen entsprechenden Gitterkoordinaten innerhalb der Abstände liegen;
Herausfiltern von Punktwolken, die Gitterzellen entsprechen, die die Abstände von der ursprünglichen Punktwolke überschreiten, und Bestimmen verbleibender Punktwolken in den ursprünglichen Punktwolken als die Zielpunktwolken; und
ein Volumenberechnungsmodul, das dazu konfiguriert ist, das Volumen des Zielobjekts innerhalb des Laderaums in Abhängigkeit von den Zielpunktwolken und der Tiefe des Laderaums zu berechnen.

6. Vorrichtung nach Anspruch 5, **dadurch gekennzeichnet, dass** die Parameterinformationen eine Brennweite umfassen und die Punktwolkenerfassungseinheit (63) zu Folgendem konfiguriert ist:
Erhalten von Pixelkoordinaten von Pixeln in dem Innenraumbild;
Erhalten dreidimensionaler Koordinaten der Pixel in dem Innenraumbild innerhalb des Laderaums in Abhängigkeit von der Brennweite der Kamera, den Pixelkoordinaten der Pixel und den den Pixeln entsprechenden Tiefeninformationen; und
Bestimmen der ursprünglichen Punktwolken innerhalb des Laderaums in Abhängigkeit von den den Pixeln in dem Innenraumbild entsprechenden dreidimensionalen Koordinaten.

7. Vorrichtung nach Anspruch 5, **dadurch gekennzeichnet, dass** das Volumenberechnungsmodul (64) zu Folgendem konfiguriert ist:
Füllen einer Zielgitterzelle in Abhängigkeit von den Tiefeninformationen und Berechnen eines Volumens eines der Zielgitterzelle entsprechenden Quaders basierend auf der Tiefe des Laderaums, wobei die Zielgitterzelle eine den Zielpunktwolken entsprechende Gitterzelle ist; und
Berechnen des Volumens des Zielobjekts in Abhängigkeit von dem Volumen des der Zielgitterzelle entsprechenden Quaders und einer Anzahl der Zielgitterzelle.

8. Vorrichtung nach Anspruch 5, **dadurch gekennzeichnet, dass** die Vorrichtung ferner Folgendes umfasst:
eine Trainingssatzerstellungseinheit, die dazu konfiguriert ist, einen Datensatz eines überwachten Trainings zu erstellen;
eine Trainingseinheit, die dazu konfiguriert ist, ein überwachtes Training an einem ursprünglichen Tiefenschätzungsmodell unter Verwendung des Datensatzes eines überwachten Trainings durchzuführen, um einen Trainingsverlust zu erhalten; und
eine Modellaktualisierungseinheit, die dazu konfiguriert ist, das ursprüngliche Tiefenschätzungsmodell basierend auf dem Trainingsverlust zu aktualisieren, bis der Trainingsverlust eine voreingestellte Verlustbedingung erfüllt, um das trainierte Zieltiefenschätzungsmodell zu erhalten.

9. Elektronische Einrichtung (7), die einen Speicher (71), einen Prozessor (70) und in dem Speicher (71) gespeicherte und auf dem Prozessor (70) ausführbare computerlesbare Anweisungen (72) umfasst, **dadurch gekennzeichnet, dass** der Prozessor (70) beim Ausführen der computerlesbaren Anweisungen (72) dazu konfiguriert ist, das Verfahren für die Objektvolumenberechnung nach einem der Ansprüche 1 bis 4 zu implementieren.

10. Computerlesbares Speichermedium, das computerlesbare Anweisungen (72) speichert, **dadurch gekennzeichnet, dass** die computerlesbaren Anweisungen (72), wenn sie durch einen Prozessor (70) ausgeführt werden, bewirken, dass das Verfahren für die Objektvolumenberechnung nach einem der Ansprüche 1 bis 4 implementiert wird.

## Revendications

1. Procédé de calcul de volume d'un objet, comprenant :
l'obtention (S101) d'une image intérieure d'une caisse de chargement au moyen d'une caméra ;
l'introduction (S102) de l'image intérieure dans un modèle cible d'estimation de profondeur entraîné afin d'obtenir des informations de profondeur de l'image intérieure ;
l'obtention (S103) de nuages de points initiaux à l'intérieur de la caisse de chargement selon les informations de profondeur et des informations de paramètres de la caméra ; et
le calcul (S104) d'un volume d'un objet cible à l'intérieur de la caisse de chargement selon des nuages de points cibles qui remplissent une condition prédéfinie dans les nuages de points initiaux, l'objet cible étant un objet correspondant aux nuages de points cibles,
**caractérisé en ce que** ledit calcul (S104) du volume de l'objet cible à l'intérieur de la caisse de chargement selon les nuages de points cibles qui remplissent une condition prédéfinie dans les nuages de points initiaux comprend :
l'obtention d'une profondeur de la caisse de chargement lorsque la caisse de chargement est à l'état vide et de distances entre une position d'installation de la caméra et quatre plans à l'intérieur de la caisse de chargement,
les quatre plans à l'intérieur de la caisse de chargement étant respectivement un plan gauche, un plan droit, un plan supérieur et un plan inférieur à l'intérieur de la caisse de chargement ;
la projection des nuages de points initiaux sur un plan bidimensionnel afin d'obtenir un ensemble de coordonnées bidimensionnelles de points ;
la réalisation d'un traitement de conversion discrète sur des coordonnées bidimensionnelles de points dans l'ensemble de coordonnées bidimensionnelles de points selon une taille prédéfinie afin d'obtenir des cellules de grille discrétisées ;
la construction d'un système de coordonnées ayant pour centre la position d'installation de la caméra, et le parcours, à partir du plan inférieur de la caisse de chargement, des cellules de grille discrétisées dans un ordre de gauche à droite et de bas en haut, afin de déterminer si les coordonnées de grille correspondant aux cellules de grille discrétisées se situent dans les limites des distances ;
l'élimination par filtrage, dans les nuages de points initiaux, de nuages de points correspondant à des cellules de grille dépassant les distances, et la détermination des nuages de points restants dans les nuages de points initiaux en tant que nuages de points cibles ; et
le calcul du volume de l'objet cible à l'intérieur de la caisse de chargement selon les nuages de points cibles et la profondeur de la caisse de chargement.

2. Procédé selon la revendication 1, **caractérisé en ce que** les informations de paramètres comprennent une distance focale ; et ladite obtention (S103) des nuages de points initiaux à l'intérieur de la caisse de chargement selon les informations de profondeur et les informations de paramètres de la caméra comprend :
l'obtention (B1) de coordonnées pixels de pixels dans l'image intérieure ;
l'obtention (B2) de coordonnées tridimensionnelles des pixels dans l'image intérieure à l'intérieur de la caisse de chargement selon la distance focale de la caméra, les coordonnées de pixels des pixels et les informations de profondeur correspondant aux pixels ; et
la détermination (B3) des nuages de points initiaux à l'intérieur de la caisse de chargement selon les coordonnées tridimensionnelles correspondant aux pixels dans l'image intérieure.

3. Procédé selon la revendication 1, **caractérisé en ce que** ledit calcul (S104) du volume de l'objet cible à l'intérieur de la caisse de chargement selon les nuages de points cibles comprend :
le remplissage d'une cellule de grille cible selon les informations de profondeur, et le calcul d'un volume d'un parallélépipède rectangle correspondant à la cellule de grille cible sur la base de la profondeur de la caisse de chargement, la cellule de grille cible étant une cellule de grille correspondant aux nuages de points cibles ; et
le calcul du volume de l'objet cible selon le volume du parallélépipède rectangle correspondant à la cellule de grille cible et le nombre de cellules de grille cibles.

4. Procédé selon la revendication 1, le procédé étant **caractérisé en ce qu'**il comprend en outre :
la construction (A1) d'un ensemble de données d'entraînement supervisé ;
la réalisation (A2) d'un entraînement supervisé sur un modèle initial d'estimation de profondeur en utilisant l'ensemble de données d'entraînement supervisé afin d'obtenir une perte d'entraînement ; et
la mise à jour (A3) du modèle initial d'estimation de profondeur sur la base de la perte d'entraînement jusqu'à ce que la perte d'entraînement remplisse une condition de perte prédéfinie, afin d'obtenir le modèle cible d'estimation de profondeur entraîné.

5. Appareil de calcul de volume d'un objet, comprenant :
une unité d'acquisition d'image (61), configurée pour obtenir une image intérieure d'une caisse de chargement au moyen d'une caméra ;
une unité d'acquisition de profondeur (62), configurée pour introduire l'image intérieure dans un modèle cible d'estimation de profondeur entraîné afin d'obtenir des informations de profondeur de l'image intérieure ;
une unité d'acquisition de nuages de points (63), configurée pour obtenir des nuages de points initiaux à l'intérieur de la caisse de chargement selon les informations de profondeur et des informations de paramètres de la caméra ; et
une unité de calcul de volume (64), configurée pour calculer un volume d'un objet cible à l'intérieur de la caisse de chargement selon des nuages de points cibles qui remplissent une condition prédéfinie dans les nuages de points initiaux, l'objet cible étant un objet correspondant aux nuages de points cibles,
**caractérisé en ce que** l'unité de calcul de volume (64) comprend :
un module d'acquisition de distance de caméra, configuré pour obtenir une profondeur de la caisse de chargement lorsque la caisse de chargement est à l'état vide, et des distances entre une position d'installation de la caméra et quatre plans à l'intérieur de la caisse de chargement, les quatre plans à l'intérieur de la caisse de chargement étant respectivement un plan gauche, un plan droit, un plan supérieur et un plan inférieur à l'intérieur de la caisse de chargement ;
un module de filtrage de nuages de points, configuré pour :
projeter les nuages de points initiaux sur un plan bidimensionnel afin d'obtenir un ensemble de coordonnées bidimensionnelles de points ;
réaliser un traitement de conversion discrète sur des coordonnées bidimensionnelles de points dans l'ensemble de coordonnées bidimensionnelles de points selon une taille prédéfinie afin d'obtenir des cellules de grille discrétisées ;
construire un système de coordonnées ayant pour centre la position d'installation de la caméra, et parcourir, à partir du plan inférieur de la caisse de chargement, les cellules de grille discrétisées dans un ordre de gauche à droite et de bas en haut, afin de déterminer si les coordonnées de grille correspondant aux cellules de grille discrétisées se situent dans les limites des distances ; et
éliminer par filtrage, dans les nuages de points initiaux, des nuages de points correspondant à des cellules de grille dépassant les distances, et déterminer les nuages de points restants dans les nuages de points initiaux en tant que nuages de points cibles ; et
un module de calcul de volume, configuré pour calculer le volume de l'objet cible à l'intérieur de la caisse de chargement selon les nuages de points cibles et la profondeur de la caisse de chargement.

6. Appareil selon la revendication 5, **caractérisé en ce que** les informations de paramètres comprennent une distance focale, et l'unité d'acquisition de nuages de points (63) est configurée pour :
obtenir des coordonnées pixels de pixels dans l'image intérieure ;
obtenir des coordonnées tridimensionnelles des pixels dans l'image intérieure à l'intérieur de la caisse de chargement selon la distance focale de la caméra, les coordonnées de pixels des pixels et les informations de profondeur correspondant aux pixels ; et
déterminer les nuages de points initiaux à l'intérieur de la caisse de chargement selon les coordonnées tridimensionnelles correspondant aux pixels dans l'image intérieure.

7. Appareil selon la revendication 5, **caractérisé en ce que** le module de calcul de volume (64) est configuré pour :
remplir une cellule de grille cible selon les informations de profondeur, et calculer un volume d'un parallélépipède rectangle correspondant à la cellule de grille cible sur la base de la profondeur de la caisse de chargement, la cellule de grille cible étant une cellule de grille correspondant aux nuages de points cibles ; et
calculer le volume de l'objet cible selon le volume du parallélépipède rectangle correspondant à la cellule de grille cible et le nombre de cellules de grille cibles.

8. Appareil selon la revendication 5, l'appareil étant **caractérisé en ce qu'**il comprend en outre :
une unité de construction d'ensemble d'entraînement, configurée pour construire un ensemble de données d'entraînement supervisé ;
une unité d'entraînement, configurée pour réaliser un entraînement supervisé sur un modèle initial d'estimation de profondeur en utilisant l'ensemble de données d'entraînement supervisé afin d'obtenir une perte d'entraînement ; et
une unité de mise à jour de modèle, configurée pour mettre à jour le modèle initial d'estimation de profondeur sur la base de la perte d'entraînement jusqu'à ce que la perte d'entraînement remplisse une condition de perte prédéfinie, afin d'obtenir le modèle cible d'estimation de profondeur entraîné.

9. Dispositif électronique (7), comprenant une mémoire (71), un processeur (70) et des instructions lisibles par ordinateur (72) stockées dans la mémoire (71) et exécutables sur le processeur (70), **caractérisé en ce que** le processeur (70), lors de l'exécution des instructions lisibles par ordinateur (72), est configuré pour mettre en œuvre le procédé de calcul de volume d'un objet selon l'une quelconque des revendications 1 à 4.

10. Support de stockage lisible par ordinateur stockant des instructions lisibles par ordinateur (72), **caractérisé en ce que** les instructions lisibles par ordinateur (72), lorsqu'elles sont exécutées par un processeur (70), entraînent la mise en œuvre du procédé de calcul de volume d'un objet selon l'une quelconque des revendications 1 à 4.
